(19) Europäisches Patentamt

European Patent Office

Office européen des brevets

(11) **EP 0 522 641 B1**

(12) **EUROPEAN PATENT SPECIFICATION**

(45) Date of publication and mention
of the grant of the patent:
**16.10.1996 Bulletin 1996/42**

(51) Int Cl.6: **C08F 12/00**, C08F 10/00,
C08F 36/00, B01J 19/20,
C08F 2/02

(21) Application number: **92202002.9**

(22) Date of filing: **01.07.1992**

(54) **Anionic extruder polymerization**

Anionische Extruder-Polymerisation

Polymérisation anionique dans une extrudeuse

(84) Designated Contracting States:
**BE DE FR GB IT NL**

(30) Priority: **04.07.1991 EP 91111093**

(43) Date of publication of application:
**13.01.1993 Bulletin 1993/02**

(73) Proprietor: **SHELL INTERNATIONALE
RESEARCH MAATSCHAPPIJ B.V.
2596 HR Den Haag (NL)**

(72) Inventors:
• **Binsbergen, Frederik Lambertus
NL-1031 CM Amsterdam (NL)**
• **Sjardijn, Willem
NL-1031 CM Amsterdam (NL)**
• **Berghaus, Ulrich
W-5100 Aachen (DE)**

(56) References cited:
**CH-A- 467 810          FR-A- 1 269 338
US-A- 3 780 139**

Remarks:
The file contains technical information submitted
after the application was filed and not included in this
specification

**Description**

The present invention relates to a process for preparing polymers by (co)polymerizing with an anionic initiator in an extruder a monomer feed comprising one or more ethylenically unsaturated compounds, such as e.g., styrene, optionally with a 1,3-diolefin such as butadiene or isoprene, and to the polymers so prepared.

Anionic polymerization of styrene, and/or other monomers, using an anionic initiator such as an alkyl-, or aryllithium in a screw-extruder is well-known in the art. Examples thereof with respect to the production of polystyrene and related polymers are for instance US patents Nos. 3,703,567 and 3,780,139 and British patent No. 1,302,069.

Thus, from US patent No. 3,703,567 a process is known for the continuous solvent-free production of segment copolymers which comprises feeding into a self-cleaning, multiple shaft screw extruder a mixture of a 1,3-diolefin, an aromatic vinyl compound, a catalytic amount of a lithium initiator and a prepolymer predominantly based on said 1,3-diolefin obtained by partially polymerizing a 1,3-diolefin and an aromatic vinyl compound mixture with a lithium initiator, and continuously removing the resultant segment copolymer from the screw extruder at a rate commensurate with the rate of said feed. In the exemplified process, styrene, the 1,3-diolefin and the lithium initiator are mixed in a brine-cooled vessel. The monomer mixture consists of 65% diolefin and 35% styrene. This mixture is introduced in a continuous prepolymerization reactor which is kept at approximately 50 °C. A degree of prepolymer conversion of approximately 20% is maintained. Then the viscous prepolymer solution is pumped into an extruder, the temperature of which is set and regulated by means of a coolant or a heating medium which circulates through the heating/cooling jacket in such a way that a specific generally increasing temperature profile is adjusted in the delivery direction thereof. The temperature prevailing in the reaction zone is controlled by a plurality of temperature detectors. Accordingly, the temperature within the reactor reaches a temperature of up to 100 °C. In order to stop and to stabilize the copolymerization reaction, a combined stopping agent and stabilizer is introduced through a pipe into approximately the last quarter of the polymerization screw extruder.

From US patent No. 3,780,139 a similar process is known wherein the 1,3-diolefin and the aromatic vinyl compound are continuously fed together with the lithium initiator into a self-cleaning, compulsory conveying, multiple shaft extruder while the temperature in the extruder is maintained between 50 and 150 °c. Again a stopper-stabilizer combination is fed into approximately the last quarter of the apparatus for stopping and stabilizing the copolymers.

In either of the two references an extruder is used, the temperature of which is set and regulated by means of a coolant or heating medium through heating or cooling jackets, which often may be subdivided into zones. The temperature in the reaction chamber is controlled by means of a plurality of heat-sensing devices (e.g. resistance thermometers). Accordingly, the temperature within the reactor reaches a temperature of up to 100 °C (US patent No. 3,703,567), or 130 °C followed by cooling to 120 °C (US patent No. 3,780,139, example 4).

The reason for cooling the extruder is that at elevated temperatures termination (thermal die-out) of the "living polymer" (polymer chain having one or more reactive sites at which propagation takes place) occurs along with other complex reactions which significantly alter the molecular weight and molecular weight distribution of the polymer. According to an article of Mr. Kern et al (Journal of Applied Polymer Science, 16, 3123-31 (1972)) thermolysis of polymer-lithium compounds is found to involve an elimination reaction with the formation of unsaturation in the polymer chain and lithium hydride. E.g., for polybutadienyllithium (i.e., living polybutadiene),

$$\sim CH_2\text{-}CH\text{=}CH\text{-}CH_2\text{-}Li \rightarrow \sim CH\text{=}CH\text{-}CH\text{=}CH_2 + LiH$$

Kinetic analysis of titration data indicates a complex mechanism for thermolysis, only fitting first-order kinetics during the rapid initial rate period. Accordingly, the termination rate for polybutadienyllithium, polyisoprenyllithium and polystyryllithium at 93 °C and 120 °C have been tentatively determined. It is concluded that polystyryllithium is even less stable than either polybutadienyllithium or polyisoprenyllithium. Based on said data it can be extrapolated that the termination rate at 200 °C for polystyryllithium amounts to approximately 30 h$^{-1}$, reducing the number of active sites in 1 minute to 61%, and in 5 minutes to only 8%. These data indicate that anionic polymerization, if taking place at all, is not considered feasible at temperatures exceeding the aforementioned temperature of 200 °C.

In a commercial operation extruders are used, having shaft diameters of at least 90 mm. The cooling capacity of such extruders is very limited. Accordingly, if anionic polymerization in an extruder is to take place, then this polymerization will be carried out more or less under adiabatic process conditions whereby temperatures of 200 °C and higher are easily reached. Having realised this, it will be appreciated that those skilled in the art will not allow anionic polymerization to take place in an extruder, unless the extruder is equipped with state of the art cooling devices and proper temperature controls.

To overcome this temperature-related problem, the best solution so far is to prepolymerize part of the monomer feed, and then to continue the polymerization in an extruder. In such a two-step process, temperatures may be reached in the order of 200 °C, without appreciable detrimental effect on the polymer quality. The final product then comprises a polymer component stemming from the prepolymerization step, which component is not affected by thermal die-out, and a polymer component stemming from the subsequent anionic polymerization. For instance British patent specification No. 1,302,069 describes a process wherein as a first step a prepolymer syrup (a solution of a styrene polymer in its monomer) is prepared by thermal polymerization in a prepolymer polymerizer. Typically 40 to 70% of the monomer is prepolymerized by this procedure. This is followed by an anionic polymerization in which the anionic initiator is introduced with the aid of a high shear mixer. The actual anionic polymerization of the remainder of the monomer is carried out in a thermally insulated pipe reactor with a diameter of 0.64 cm and a length of 7.75 m. A residence time of 10 minutes is reported with a maximum obtainable conversion of 99.1 %wt. In this two-step process, the heat of polymerization is used to raise the temperature of the polymer composition to a convenient processing temperature, for example 200 °C, which permits the polymer composition to be devolatilized and subsequently directly processed.

It will be appreciated that in the commercialization of the above processes it would be highly advantageous when a polymer could be produced of high quality (high molecular weight and narrow distribution), in high amounts, i.e., continuously with a high throughput, without too many complicated process conditions. In other words, the commercial process needs improvement with respect to the following points:

- continuous mass polymerization without a solvent;
- continuous production from monomer to finished or semi-finished products with positive technical and economical manufacturing conditions; and
- the possibility of purposeful influencing of the product's quality during the polymerization process.

In contrast to the general believe, and due to careful and elaborative experimentation, it has now been found that anionic (co)polymerization in an extruder in a more or less adiabatic fashion is possible, without requiring substantial temperature controls, and without significant thermal die-out of the living polymers, even when temperatures well exceeding 200 °C are reached. This mimics the situation in a commercial production extruder with a shaft diameter greater than 90 mm, which consequently has a poor heat-removing capacity. In effect, a run-away polymerization takes place, leading to fully polymerized polymers in a time span of approximately 20 seconds or less.

Accordingly, the invention provides a process for preparing polymers by (co)polymerizing with an anionic initiator in an extruder a monomer feed comprising one or more ethylenically unsaturated compounds, wherein the monomer feed contains at least 50 %by weight of one or more ethylenically unsaturated compounds based on the total weight of monomer feed, the temperature of the reaction mixture is allowed to increase in the flow direction to temperatures in the range of 150 to 300 °C, preferably in the range of 200 to 300 °C, and the residence time of the reaction mixture in the reaction zone of the extruder is less than 5 minutes, preferably less than 2 minutes, more preferably less than 30 seconds.

In other words, it has now been found that a polymer can be produced by anionic extruder polymerization of a monomer feed in an adiabatic fashion. For such a process to take place (thermal) prepolymerization is not required, but may be used optionally.

Without trying to offer a technical explanation, it is believed that the polymerization proceeds rapidly at the increasing temperature, and is virtually complete in a very early stage of the process. Due to the short residence time of the reaction mixture in the reaction zone of the extruder of the resulting (living) polymer at the elevated temperature, the extruded polymer is substantially unaffected by the competing reaction(s) of thermal die-out, and/or thermal degradation of the resulting polymer (occurring spontaneously above the degradation temperature).

It is observed that extruders have been used before for studying polymerisation reactions. For instance, the dissertation of Dr. J.A. Speur, "Polymerisation reactions in a counter-rotating closely-intermeshing twin-screw extruder", State University of Groningen (RUG), 1988, discloses the anionic polymerisation of ε-caprolactam to polyamide-6 (Chapter 4). From this study, related to ring-opening polymerisation, no conclusion for the possibility of addition polymerization of ethylenically unsaturated monomers can be drawn. From, for instance, Odian, Principles of Polymerization, p.538 (1981) it is known that, "The anionic polymerization of lactams is quite different from other polymerizations in two respects. First, the propagating center is not a radical, carban ion or carbonium ion, but is the cyclic amide linkage of the N-acyllactam. Second, the monomer does not add to the propagating chain; it is the monomer anion, referred to as activated monomer, which adds to the propagating chain." Besides, the heat of polymerization for polymerizing ε-caprolactam is much lower than that for e.g., styrene.

Extruder, as defined in the process of the present invention, broadly encompasses high solid mixers suitable for blending polymeric material, and having a feed inlet (when using polymer pellets, a hopper) and an outlet for the blended (polymeric) material. In addition, the extruder may have a die which shape is such that the product is obtained as pipe, film, sheeting, bubble (blown film), tubing, profile, coated wire and coated paper.

By convention, the size of an extruder is defined by the nominal inside diameter of the barrel. The length of an extruder barrel is expressed in terms of its length to diameter ratio (L/D), eg, 20/1, 24/1, 30/1 and 36/1. By definition, the feed inlet (hopper) is at the rear of the extruder and melt (or in the present process reaction mixture) is pumped out the front of the extruder.

Pressures in an extruder may reach 69 MPa (10,000 psi); thus a thick-walled barrel is required. In commercial extruders, for temperature controle, the barrel is divided into three to six zones each with its own thermocouple and temperature-control instrument. In addition, most extruders are equipped for barrel cooling; both air and water cooling systems are used.

It is to be understood that the location of the reaction zone of an extruder depends on the type of extruder, the geometry and thread of the screw, and the rotation velocity of the screw. The extruder is preferably a twin screw extruder, although single screw extruders may be used too. Preferably, the twin screw extruder has screws that intermesh instead of being tangential. More preferably, the intermeshing screws are co-rotating instead of counter-rotating.

Generally, the reaction zone is located 2 barrel housings (segments or zones) downstream of the initiator inlet, i. e., often approximately 20 cm downstream of the initiator inlet.

It is noted that the temperature limit of 300 °C depends on the selection of the monomer feed, and on the degradation temperature of the resulting polymer. The temperature limit of 300 °C is selected having styrene as the monomer feed in mind, and having regarded the article by Mr. Moad et al, Eur. Polym. J., 25, 767-777 (1989) and the references therein, which article relates to "weak links" in polystyrene (however, prepared by radical polymerization using AIBN or benzoyl peroxide as initiator). In case of the preparation of polymers that are producible by anionic polymerization, and that are stable at even higher temperatures, than the aforementioned upper limit will be subsequently higher than 300 °C too.

The polymers prepared in accordance with the present invention show a residual monomer content of 200 ppm or less. This residual content of monomer is already very low with regard to health, safety, and environment. It will be appreciated that, in order to lower the amount of volatile material even further, a vent area for volatile and air removal or a separate devolatilizing section could be installed, for instance (the latter) at the front of the extruder (i.e., the outlet for the extruded polymer).

It is also known in the art, see for instance Encycl. Polym., Eng. 14, 169-189 ("Reactive extrusion") to remove volatile components from the extruder by applying a vacuum to an appropriate barrel segment. Thus, when using extruder reactors for condensation polymerization, such extruders may typically be provided for vacuum venting at barrel segments at or near the reaction site to remove volatile by-products such as water. When synthesising addition polymers, because of the high heat of polymerization, it is advantageous to remove volatile material through vacuum venting at an appropriate extruder barrel segment, thereby cooling the polymerizing reaction mixture. It has been found that this volatile material suitable may be (excess) monomer, that is then subsequently condensed and reintroduced.

The process of the invention is primarily intended for anionic polymerization. With respect to operating conditions such as internal pressure, initiation temperature, and choice of extruder type, etc., the process is suitably carried out under conditions known in the art for extruding polystyrene using polymer pellets. It will be appreciated, that a further advantage is obtained in that the initiator is introduced into the extruder downstream to the inlet of the monomer feed. In doing so, the process circumvents the risky operation of storing the initiator in the monomer bulk, as described in for instance the aforementioned US patent Nos. 3,703,567 and 3,780,139.

The invention is suitable carried out with any one or more monomers which are susceptible to anionic polymerization. Useful monomers are known to include conjugated diolefins, aromatic vinyl compounds and activated alpha-olefins. Preferred conjugated diolefins are those having from 4 to 12 carbon atoms per molecule, while the polymerization of conjugated diolefins having 4 or 5 carbon atoms per molecule is generally of greatest commercial interest. Specific examples of preferred conjugated diolefin monomers are 1,3-butadiene; isoprene; piperylene; 2,3-dimethyl-1,3-butadiene; 2-methyl-1,3-pentadiene; 2,3-dimethyl-1,3-pentadiene; 2-methyl-3-ethyl-1,3-pentadiene; and 2-phenyl-1,3-butadiene. 1,3-Butadiene, isoprene, piperylene and mixtures thereof are most preferred. Preferred aromatic vinyl compounds are the vinyl-substituted aromatic hydrocarbons such as styrene; 1-vinylnaphthalene; 2-vinylnaphthalene; 3-methylstyrene, and the (alpha-)alkyl, cycloalkyl, aryl, aralkyl and arylalkyl and/or halogenated derivatives thereof in which the total number of carbon atoms in the combined substituents is generally no greater than 12. Additional specific examples of such aromatic vinyl compounds include alpha-methylstyrene; 3,5-diethylstyrene; 3-methylstyrene; 4-cyclohexylstyrene; 2,4,6-trimethylstyrene; 4-phenylstyrene; 2-ethyl-4-benzylstyrene; 7-decyl-2-vinylnaphthalene; 4,5-dimethyl-1-vinylnaphthalene; 3,6-di-p-tolyl-1-vinylnaphthalene; and 4-chlorostyrene. Most preferred aromatic vinyl compound is styrene. Preferred activated alpha-olefins suitable for anionic polymerization include, for example, acrylic and methacrylic esters; methyl vinyl ketones; vinylidene esters; nitroethylenes; vinylidene cyanide; acrylonitrile; and related cyanyl derivatives. Preferred activated alpha-olefins are acrylic, methacrylic and vinylidene esters.

From the standpoint of commercial interest, the process of the invention is very advantageously carried out with one or more of the monomers selected from the group consisting of butadiene, isoprene, and styrene. A surprising advantage of the present process is that it can suitable be used for preparing transparent copolymers, such as for instance the hereinafter exemplified block copolymer of styrene and isoprene.

The polymerization initiators (sometimes termed polymerization catalysts) suitable employed in the process according to the invention are likewise those which the art generally recognises for anionic polymerization service. In general terms the initiator in any given process application is typically selected from alkali metals or organic alkali metal derivatives. Preferably the initiator is an organolithium compound, and more preferably a monolithium compound. Such initiators can, in case of the monolithium compounds, be represented by the formula RLi or ROLi, wherein R is a hydrocarbon radical which can be aliphatic, cycloaliphatic or aromatic. The carbon number of the hydrocarbon radical is not limited insofar as operability is concerned, although those of up to about 20 carbon atoms are generally preferred from the standpoint of availability. Aliphatic monolithium initiators form a particularly preferred class, including, for example, the specific compounds n-butyllithium, sec-butyllithium, t-butyllithium, n-decyllithium, eicosyllithium, lithium methoxide, and lithium ethoxide. Examples of aromatic initiators include phenyllithium, 1-naphthyllithium, and p-tolyllithium. A cycloaliphatic monolithium initiator is exemplified by cyclohexyllithium. Mixtures of initiators are also very suitable.

The ratio of initiator versus monomer in the feed will determine the molecular weight of the polymer resulting from this process. Preferably, the molar ratio of initiator versus monomer is in the range of from 1:500 to 1:50,000. However, if a polymer is required of a very low molecular weight (e.g., low molecular weight polystyrene, which is very hard to produce via solution polymerization in an economically feasible way in view of difficulties regarding the solvent recycle), then the molar ratio of initiator versus monomer may be in the range of from 1:15 to 1:50,000.

With respect to the preferred embodiment, using styrene, styrene/butadiene, or styrene/isoprene as the monomer feed, and using sec-butyllithium as the initiator, approximately 0.2 to 1.0 g per kg styrene is used. More preferably, of from 0.5 to 8.0 g sec-butyllithium per kg styrene is used.

In addition, the monomer feed may contain inert fillers, such as chopped glass fibres, titanium dioxide, and polymeric material (e.g., polyphenylene ether (PPE), ethylene-propylene rubber (EPR) or ethylene-propylene-diene monomer rubber (EPDM) and/or the independently prepared prepolymer of the monomer feed); solvents and/or blowing agents, such as pentane (when used to prepare an expandable polymer extrudate, the extrudate is rapidly cooled after extrusion); viscosifiers and extender oils; pigments; and/or other additives well known in the art. Alternatively, the additive or additives are added via a separate inlet into the extruder.

It is observed that the polymer which comes out of the extruder is deeply coloured, indicative for the presence of living polymer. When using styrene as (part of) the monomer feed, the extrudate polymer has a strong red hue due to the polystyryllithium still present. This (red) colour disappears within a couple of days, presumable due to diffusion of moisture into the extrudate polymer. The (red) colour can also be titrated away while inside the extruder by the introduction of e.g., diethylketone or trimethylchlorosilane via an inlet at the front of the extruder.

The living character of the produced polymer makes it further possible to carry out a subsequent chemical reaction inside the extruder. E.g., synthesis of a block copolymer is possible, by the introduction of an other monomer further downstream the extruder. It is also possible to make end-group functionalized polymers, for instance by the introduction of carbon dioxide. Coupling of living polymer chains is an option too. This can for instance be effected by a coupling agent such as an ester or a halosilane.

More particular, it is observed that in the aforementioned process, the effect of thermal die-out on both the molecular weight, and the molecular weight distribution is not technically prohibitive.

The invention is illustrated by the following examples, which are merely for the purpose of illustration and are not to be regarded as limiting the scope of the invention or the manner in which it can be practised.

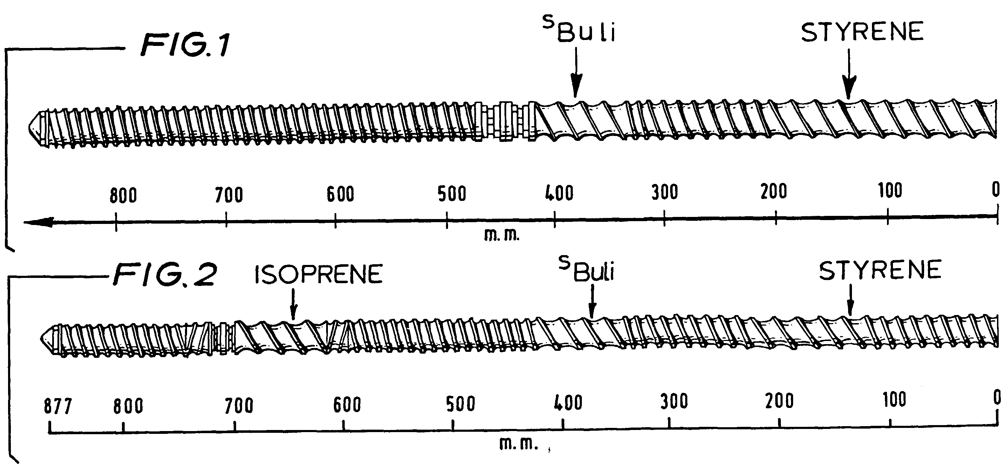

In the experiments, a co-rotating, self-wiping twin screw extruder, ZSK 30 ex Werner & Pfleiderer, with an L/D ratio of 29/1 was used. The geometry of the screw has been depicted in the figures 1 and 2, Fig. 1 showing the extruder used for producing polystyrene, and Fig. 2 showing the extruder used for producing a styrene-isoprene block copolymer. Example 19 uses a similar extruder, ZSK 25, but with an L/D ratio of 48/1.

The styrene and isoprene used in the experiments were freed from the inhibitor by percolation over a cooled neutral alumina column. Dissolved oxygen was removed by purging with nitrogen. In all experiments except for example 19, a 1 molar solution of sec-butyllithium in cyclohexane was used as initiator. The initiator was introduced about 1/4 downstream to the monomer inlet.

Examples 1 to 6.

Styrene was introduced at the inlet of the extruder at a rate of 5 kg/h. The ratio of sec-butyllithium was kept constant at 0.5 g/kg styrene. The influence of the screw rotating speed on the final polystyrene molecular weight and the molecular weight distribution is shown in Table 1.

Examples 7 to 12.

The aforementioned procedure was followed, however, introducing the styrene feed at a variable rate, and keeping the screw rotating speed constant at 200 rpm. The influence of the styrene feed rate on the final polystyrene molecular weight and the molecular weight distribution is shown in Table 2.

## Examples 13 to 16.

In this series of experiments, styrene was copolymerized with isoprene. Variable amounts of isoprene were introduced into the extruder and intimately mixed with the living polystyryllithium at about 3/4 downstream of the styrene monomer inlet. Styrene was introduced at the inlet of the extruder at a rate of approximately 3.5 kg/h. The ratio of initiator was kept at 0.7 g sec-butyllithium/kg styrene, and the screw rotating speed was kept constant at 200 rpm. The influence of the polymerization variables on the final copolymer properties is shown in Table 3. The glass transition temperature (Tg) values are obtained from DMA measurements at the maximum value of the loss modulus (E"). Injection moulded plagues of the obtained materials were opaque.

## Examples 17 and 18.

In this series of copolymerizations, mixtures of variable amounts of styrene and isoprene were fed at the inlet of the extruder at a rate of approximately 2.7 kg/h. The ratio of initiator was kept constant at 0.8 g sec-butyllithium/kg styrene, and the screw rotating speed was kept constant at 200 rpm. The influence of the polymerization variables on the final copolymer properties is shown in Table 4. Injection moulded plagues of the obtained materials were transparent.

## Example 19.

The aforementioned procedure was used, however now employing a co-rotating, self-wiping twin-extruder, ZSK 25, with an L/D ratio of 48/1. Styrene was fed in the first barrelhousing at a rate of 0.8 kg/h. The sec-butyllithium (0.15 M/l in cyclohexane) was dosed at a rate of 21.4 ml/h. The obtained product had an Mw of 289.000 and an Mn of 153.000 (melt flow index of 0.5 g/10 min).

Table 1

| Exp. | screw speed rpm | Mw $10^{-3}$ (a) | Mn $10^{-3}$ (b) | Mw/Mn |
|---|---|---|---|---|
| 1 | 50 | 448 | 113 | 3.98 |
| 2 | 100 | 479 | 163 | 2.94 |
| 3 | 150 | 272 | 113 | 2.41 |
| 4 | 200 | 270 | 119 | 2.26 |
| 5 | 250 | 197 | 120 | 1.64 |
| 6 | 300 | 190 | 121 | 1.57 |

(a) weight average molecular weight

(b) number average molecular weight

Table 2

| Exp. | styrene feed kg/h | Mw $10^{-3}$ | Mn $10^{-3}$ | Mw/Mn | Mv $10^{-3}$ (c) |
|---|---|---|---|---|---|
| 7 | 3.46 | 358 | 167 | 2.14 | 245 |
| 8 | 3.62 | 242 | 131 | 1.84 | 185 |
| 9 | 4.75 | 270 | 119 | 2.26 | 215 |
| 10 | 7.5 | | | | 212 |
| 11 | 8.5 | 480 | 242 | 1.98 | 336 |
| 12 | 11.09 | | | | 257 |

(c) viscosity average molecular weight

Table 3

| Exp. | styrene feed kg/h | isoprene content %wt | $^s$BuLi g/kg styrene | Mn $10^{-3}$ | Tg (PI) °C (d) | Tg (PS) °C (e) |
|---|---|---|---|---|---|---|
| 13 | 3.72 | 3.9 | 0.67 | 84 | -75 | 114 |
| 14 | 3.30 | 6.8 | 0.56 | 84 | -76 | 112 |
| 15 | 4.53 | 17.5 | 0.77 | 148 | -48 | 111 |
| 16 | 2.28 | 33.0 | 0.81 | 93 | -45 | 109 |

(d) Glass transition temperature for polyisoprene (PI) block

(e) Glass transition temperature for polystyrene (PS) block

Table 4

| Exp. | monomer feed kg/h | isoprene content %wt | $^s$BuLi g/kg styrene | Mn $10^{-3}$ | Tg (PI) °C | Tg (PS) °C |
|---|---|---|---|---|---|---|
| 17 | 2.70 | 10.0 | 0.79 | 125 | -67 | 100 |
| 18 | 2.64 | 20.0 | 0.85 | 113 | -75 | 95 |

## Claims

1. A process for preparing polymers by (co)polymerizing with an anionic initiator in an extruder a monomer feed comprising one or more ethylenically unsaturated compounds, wherein the monomer feed contains at least 50 %by weight of one or more ethylenically unsaturated compounds based on the total weight of monomer feed, the temperature of the reaction mixture is allowed to increase in the flow direction to temperatures in the range of 150 to 300 °C, and the residence time of the reaction mixture in the reaction zone of the extruder is less than 5 minutes.

2. A process as claimed in claim 1, wherein the extruder is equipped with a vent or devolatilizing section.

3. A process as claimed in anyone of claims 1 or 2, wherein the initiator is introduced via a separate inlet downstream to the inlet of the monomer feed.

4. A process as claimed in anyone of claims 1 or 3, wherein the monomer feed contains at least one monomer selected from the group consisting of conjugated diolefins, aromatic vinyl compounds and activated alpha-olefins.

5. A process as claimed in anyone of claims 1 to 4, wherein the monomer feed comprises styrene, isoprene, 1,3-butadiene, piperylene or mixtures thereof.

6. A process as claimed in anyone of claims 1 to 5, wherein the initiator is sec-butyllitium, and the ratio of sec-butyllithium versus monomer is in the range of 0.2 to 1.0 g per kg of monomer.

7. A process as claimed in anyone of claims 1 to 6, wherein into the polymer additives are introduced, via the monomer feed or separately, which additives are selected from inert fillers, solvents and/or blowing agents, and extender oils.

8. A process as claimed in anyone of claims 1 to 7, wherein downstream to the monomer inlet, but before the polymer outlet, a reactant for functionalizing the polymer is introduced, which reactant is selected from,

   a) at least one monomer different from the monomer feed to produce a block copolymer;
   b) a coupling agent to produce coupled polymers; and
   c) a reactant forming a reactive end-group of the polymer.

## Patentansprüche

1. Verfahren zur Herstellung von Polymerisaten durch (Co-)Polymerisation eines eine oder mehrere ethylenisch ungesättigte Verbindungen enthaltenden Monomereinsatzes mit einem anionischen Initiator in einem Extruder, bei dem der Monomereinsatz mindestens 50 Gew.-% einer oder mehrerer ethylenisch ungesättigter Verbindungen, bezogen auf das Gesamtgewicht des Monomereinsatzes, enthält, man die Temperatur des Reaktionsgemischs in Strömungsrichtung auf Temperaturen im Bereich von 150°C bis 300°C ansteigen läßt und die Verweilzeit des Reaktionsgemischs in der Reaktionszone des Extruders weniger als 5 Minuten beträgt.

2. Verfahren nach Anspruch 1, bei dem der Extruder mit einer Entgasungszone ausgestattet ist.

3. Verfahren nach einem der Ansprüche 1 oder 2, bei dem man den Initiator über einen getrennten Einlaß hinter dem Einlaß des Monomereinsatzes zuführt.

4. Verfahren nach einem der Ansprüche 1 bis 3, bei dem der Monomereinsatz mindestens ein aus der Gruppe, bestehend aus konjugierten Diolefinen, aromatischen Vinylverbindungen und aktivierten alpha-Olefinen, ausgewähltes Monomer enthält.

5. Verfahren nach einem der Ansprüche 1 bis 4, bei dem der Monomereinsatz Styrol, Isopren, 1,3-Butadien, Piperylen oder deren Gemische enthält.

6. Verfahren nach einem der Ansprüche 1 bis 5, bei dem man als Initiator sec-Butyllithium einsetzt und das Verhältnis von sec-Butyllithium zu Monomer im Bereich von 0,2 bis 1,0 g pro kg Monomer liegt.

7. Verfahren nach einem der Ansprüche 1 bis 6, bei dem man dem Polymerisat über den Monomereinsatz oder getrennt Additive zusetzt, die aus inerten Füllstoffen, Lösungsmitteln und/oder Treibmitteln sowie Streckölen ausgewählt sind.

8. Verfahren nach einem der Ansprüche 1 bis 7, bei dem man hinter dem Monomereinlaß, aber vor dem Polymerisatauslaß, einen Reaktanden zur Funktionalisierung des Polymerisats zuführt, der aus

a) mindestens einem von dem Monomereinsatz verschiedenen Monomerzur Herstellung eines Blockcopolymerisats,
b) einem Kopplungsmittel zur Herstellung gekoppelter Polymerisate und
c) einem eine reaktive Polymerendgruppe bildenden Reaktanden ausgewählt ist.

**Revendications**

1. Procédé de préparation de polymères par (co)polymérisation avec un amorceur anionique et dans une extrudeuse d'une charge de monomères comprenant un ou plusieurs composés à insaturation éthylénique, où la charges des monomères contient au moins 50% en poids d'un ou plusieurs composés à insaturation éthylénique, sur base du poids total de la charge des monomères, on laisse la température du mélange réactionnel s'accroître dans la direction d'écoulement jusqu'à atteindre des températures qui varient de 150 à 300°C et où la durée de séjour du mélange réactionnel dans la zone de réaction de l'extrudeuse est inférieure à 5 minutes.

2. Procédé suivant la revendication 1, caractérisé en ce que l'extrudeuse est équipée d'un évent ou d'une section d'élimination des matières volatiles.

3. Procédé suivant l'une quelconque des revendications 1 ou 2, caractérisé en ce que l'on introduit 1' amorceur par une entrée séparée en aval de l'entrée de la charge de monomères.

4. Procédé suivant l'une quelconque des revendications 1 ou 3, caractérisé en ce que la charge des monomères contient au moins un monomère choisi dans le groupe formé par des dioléfines conjuguées, des composés vinyliques aromatiques et des alpha-oléfines activées.

5. Procédé suivant l'une quelconque des revendications 1 à 4, caractérisé en ce que la charge des monomères comprend du styrène, de l'isoprène, du 1,3-butadiène, du pipérylène, ou des mélanges de ceux-ci.

6. Procédé suivant l'une quelconque des revendications 1 à 5, caractérisé en ce que l'amorceur est le sec-butyllithium et le rapport du sec-butyllithium au monomère varie de 0,2 à 1,0 g par kg de monomère.

7. Procédé suivant l'une quelconque des revendications 1 à 6, caractérisé en ce que l'on introduit les additifs du polymère via la charge des monomères ou séparément, lesquels additifs sont choisis parmi des charges inertes, des solvants et/ou des agents porogènes et/ou des huiles extendeuses.

8. Procédé suivant l'une quelconque des revendications 1 à 7, caractérisé en ce qu'en aval de l'entrée des monomères, mais avant la sortie du polymère, on introduit un réactif de fonctionnalisation du polymère, lequel réactif est choisi parmi

    a) au moins un monomère différent de la charge des monomères pour produire un polymère séquencé,
    b) un agent de couplage pour produire des polymères couplés et
    c) un réactif formant un groupe terminal réactif du polymère.

FIG.1

SBuli          STYRENE

| 800 | 700 | 600 | 500 | 400 | 300 | 200 | 100 | 0 |

m.m.

FIG.2   ISOPRENE          SBuli          STYRENE

| 877 | 800 | 700 | 600 | 500 | 400 | 300 | 200 | 100 | 0 |

m.m.

EP 0 522 641 B1